(19) Europäisches Patentamt
European Patent Office
Office européen des brevets

(11) EP 3 141 587 B1

(12) **EUROPEAN PATENT SPECIFICATION**

(45) Date of publication and mention
of the grant of the patent:
**08.05.2019 Bulletin 2019/19**

(51) Int Cl.:
*C09K 5/04* (2006.01)    *C10M 105/38* (2006.01)
*C10M 107/24* (2006.01)  *C10M 107/34* (2006.01)
*F25B 1/00* (2006.01)    *C10N 40/30* (2006.01)

(21) Application number: **16752207.7**

(22) Date of filing: **22.01.2016**

(86) International application number:
**PCT/JP2016/051888**

(87) International publication number:
**WO 2016/132818 (25.08.2016 Gazette 2016/34)**

(54) **COMPOSITION CONTAINING MIXTURE OF FLUORINATED HYDROCARBONS, AND METHOD FOR PRODUCING SAME**

ZUSAMMENSETZUNG MIT EINER MISCHUNG AUS FLUORIERTEN KOHLENWASSERSTOFFEN UND VERFAHREN ZUR HERSTELLUNG DAVON

COMPOSITION CONTENANT UN MÉLANGE D'HYDROCARBURES FLUORÉS, ET SON PROCÉDÉ DE PRODUCTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.02.2015 JP 2015030991**

(43) Date of publication of application:
**15.03.2017 Bulletin 2017/11**

(60) Divisional application:
**19164021.8**

(73) Proprietor: **Daikin Industries, Ltd.**
**Osaka 530-8323 (JP)**

(72) Inventors:
• **ITANO, Mitsushi**
  **Osaka-shi**
  **Osaka 530-8323 (JP)**
• **KUROKI, Hitomi**
  **Osaka-shi**
  **Osaka 530-8323 (JP)**
• **TSUCHIYA, Tatsumi**
  **Osaka-shi**
  **Osaka 530-8323 (JP)**
• **YAMADA, Yasufu**
  **Osaka-shi**
  **Osaka 530-8323 (JP)**

(74) Representative: **Hoffmann Eitle**
**Patent- und Rechtsanwälte PartmbB**
**Arabellastraße 30**
**81925 München (DE)**

(56) References cited:
**WO-A1-2015/083834      JP-A- H03 287 688**
**JP-A- H06 256 757       JP-A- H09 324 175**
**JP-A- 2012 007 164      JP-A- 2012 082 430**
**JP-A- 2014 198 854**

**Description**

Technical Field

The present invention relates to a composition comprising a mixture containing fluorinated hydrocarbons that are used as, for example, a refrigerant, a method for producing the composition, the use of the composition and a device comprising the composition. The present invention also includes a case in which the composition consists of the three basic components contained in the mixture, i.e., difluoromethane (R32), pentafluoroethane (R125), and 1,1,1,2-tetrafluoroethane (R134a).

Background Art

Refrigerants recently used, for example, for air conditioners, refrigerating devices, and refrigerators are mixtures of fluorinated hydrocarbons that contain no chlorine in their molecular structures, such as difluoromethane ($CH_2F_2$, R32, boiling point: -52°C), pentafluoroethane ($CF_3CHF_2$, R125, boiling point: -48°C) , 1,1,1-trifluoroethane ($CF_3CH_3$, R143a, boiling point: -48°C) , 1,1,1,2-tetrafluoroethane ($CF_3CH_2F$, R134a, boiling point: -26°C) , and 1,1-difluoroethane ($CHF_2CH_3$, R152a, boiling point: -24°C).

Among the above fluorinated hydrocarbons, a ternary mixed refrigerant of R32/R125/R134a in which the proportions thereof are 23/25/52 wt.-% (R407C), and a ternary mixed refrigerant of R125/143a/R134a in which the proportions thereof are 44/52/4 wt.-% (R404A), have been proposed, and R404A is currently widely used as a refrigerant for freezing and refrigerated storage (see, for example, JP-B-2869038 and US 8, 168, 077).

However, the global warming potential (GWP) of R404A is as high as 3922, which is equal to or higher than that of $CHClF_2$ (R22), which is a chlorine-containing fluorinated hydrocarbon. There is thus a desire to develop, as alternative refrigerants for R404A, a refrigerant and refrigerant composition that have, for example, a non-flammability similar to that of R404A, a refrigerating capacity that can replace that of R404A, a ratio of refrigerating capacity to power consumed in a refrigeration cycle (coefficient of performance (COP)) that is equal or superior to that of R404A, and a lower GWP than that of R404A.

EP-A-0 811 670 discloses a ternary mixture refrigerant suitable as a substitute for R22 and a heat pump apparatus utilizing the same are disclosed. The ternary mixture refrigerant comprises R32, R125 and R134a in a composition range defined by a straight line A connecting point a1 (R32/R134a = 43/57 wt.-%) and a2 (R125/R134a = 73/27 wt.-%), a line B connecting points b1 (R32/R134a = 21/79 wt.-%) and b2 (R125/R134a = 55/45 wt%), a line D connecting point d1 (R32/R125 = 60/40 wt.-%) and a vertex of R134a, and a line E connecting points e1 (R32/R125 = 53/47 wt.-%) and e2 (R32/R134a = 19/81 wt%) in a ternary composition chart of R32, R125 and R134a.

Summary of Invention

Technical Problem

An object of the present invention is to provide, as alternative refrigerants for the R404A that is currently widely used, a refrigerant and refrigerant composition that have, for example, a non-flammability similar to that of R404A, a refrigerating capacity that can replace that of R404A, a COP equal or superior to that of R404A, and a lower GWP than that of R404A. The definition of non-flammability in the present specification conforms to U.S. ASHRAE Standard 34-2013.

Solution to Problem

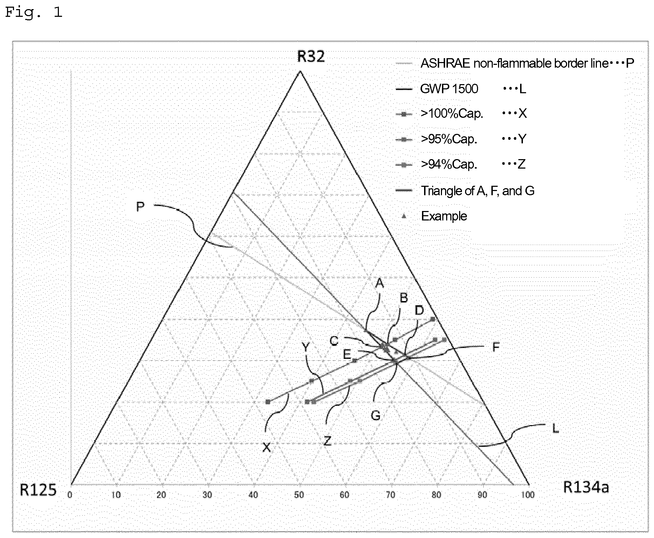

The present inventors conducted extensive research to achieve the above object, and found that the above object can be achieved by a composition comprising R32, R125 and R134a in specified amounts and mixing ratios. Thus, the present invention provides a composition comprising a mixture containing difluoromethane (R32), pentafluoroethane (R125), and 1,1,1,2-tetrafluoroethane (R134a), wherein in a ternary composition diagram (see Fig. 1) in which the sum of the concentrations (in wt.-%) of R32, R125 and R134a is 100 wt.-% the composition ratio of the R32, R125 and R134a contained in the mixture falls within a triangle having the points A, F and G as vertices:

> point A (R32/R125/R134a = 37.3/17.0/45.7),
> point F (R32/R125/R134a = 30.7/10.9/58.4), and
> point G (R32/R125/R134a = 29.4/14.1/56.5);

preferably the points A, D and E:

point A (R32/R125/R134a = 37.3/17.0/45.7),
point D (R32/R125/R134a = 31.4/11.5/57.1), and
point E (R32/R125/R134a = 30.2/14.4/55.4);

and more preferably the points A, B and C:

point A (R32/R125/R134a = 37.3/17.0/45.7),
point B (R32/R125/R134a = 34.0/13.9/52.1), and
point C (R32/R125/R134a = 33.3/15.5/51.2);

wherein the mixture comprises R32, R125, and R134a in amounts such that the sum of the concentrations thereof is ≥ 99.5 wt.-%.

Further the present invention provides (i) a method for producing the present composition, comprising mixing R32, R125 and R134a such that the composition ratio thereof is adjusted to fall within the ranges as defined above, (ii) a method for operating a refrigerating device, comprising operating a refrigeration cycle using the present composition, and (iii) a refrigerating device comprising the present composition.

Preferred embodiments of the present invention are as defined in the appended dependent claims and/or in the following detailed description.

Advantageous Effects of Invention

The present invention makes it possible to obtain a composition comprising a mixture containing fluorinated hydrocarbons that has, for example, a non-flammability similar to that of R404A, a refrigerating capacity that can replace that of R404A, a COP equal or superior to that of R404A, and a lower GWP than that of R404A because the composition ratio of the mixture falls within a triangle having the following three points as vertices in a ternary composition diagram for R32, R125, and R134a indicated by the triangular coordinates of Fig. 1:

point A (R32/R125/R134a = 37.3/17.0/45.7 wt.-%),
point F (R32/R125/R134a = 30.7/10.9/58.4 wt.-%), and
point G (R32/R125/R134a = 29.4/14.1/56.5 wt.-%),

wherein the mixture comprises R32, R125, and R134a in amounts such that the sum of the concentrations thereof is ≥ 99.5 wt.-%.

Brief Description of Drawings

Fig. 1 illustrates a ternary composition diagram for R32, R125, and R134a in which the compositions of mixtures of the present invention (in order from biggest to smallest triangular range, a triangle defined by points A, F, and G, a triangle defined by points A, D, and E, and a triangle defined by points A, B, and C) are shown.

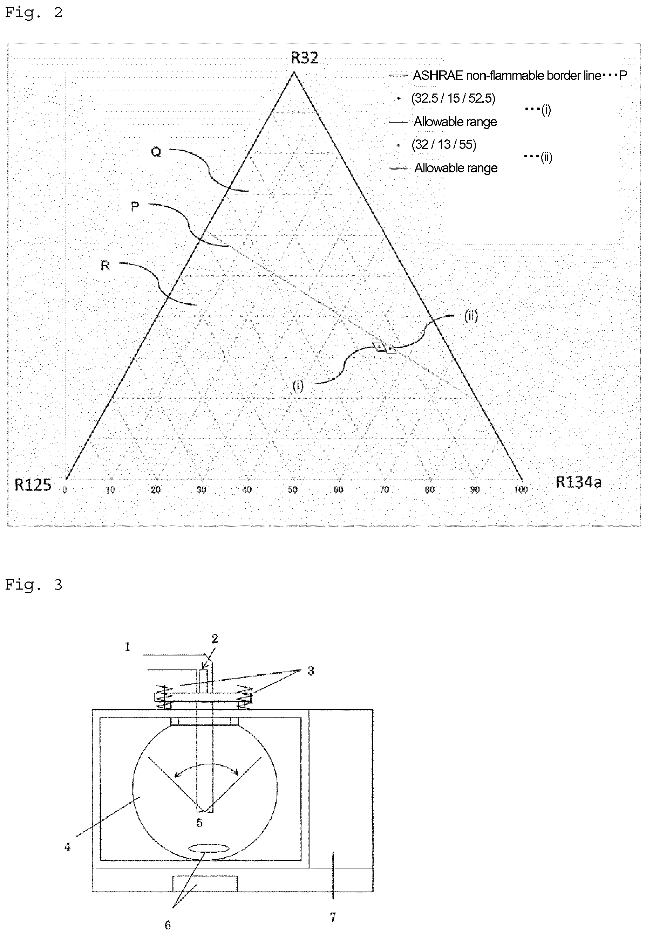

Fig. 2 illustrates a ternary composition diagram for R32, R125, and R134a in which P: ASHRAE non-flammable border line, Q: ASHRAE flammable region, and R: ASHRAE non-flammable region are shown. The diagram also shows the relationship between the allowable range (including an allowable error) set for each refrigerant in the production of a mixed refrigerant and criteria for determining whether the mixed refrigerant is classified as a mixed refrigerant that is non-flammable according to ASHRAE or a mixed refrigerant that is flammable according to ASHRAE.

Fig. 3 illustrates a schematic view of an apparatus used in a flammability test.

Description of Embodiments

The present composition comprises a mixture containing fluorinated hydrocarbons, the composition ratio of the fluorinated hydrocarbons contained in the mixture falling within a triangle having the following three points as vertices in a ternary composition diagram (Fig. 1) in which the sum of the concentrations of R32, R125, and R134a is 100 wt.-%: point A (R32/R125/R134a = 37.3/17.0/45.7 wt.-%), point F (R32/R125/R134a = 30.7/10.9/58.4 wt.-%), and point G (R32/R125/R134a = 29.4/14.1/56.5 wt.-%), wherein the mixture comprises R32, R125, and R134a in amounts such that the sum of the concentrations thereof is ≥ 99.5 wt.-%.

The present composition has, for example, a non-flammability similar to that of R404A, a refrigerating capacity that can replace that of R404A, a COP equal or superior to that of R404A, and a lower GWP than that of R404A.

More specifically, since the present composition is non-flammable according to ASHRAE like R404A (details of the definition are described later), it is safer than flammable refrigerants and can be used in a wide range of applications.

The refrigerating capacity of the present composition can replace that of R404A. More specifically, the refrigerating capacity of the composition of the present invention is preferably $\geq 94\%$, more preferably $\geq 95\%$, and even more preferably $\geq 100\%$, relative to that of R404A.

The COP of the present composition is equal or superior to that of R404A ($\geq 100\%$). The COP of the composition of the present invention is more preferably $\geq 105$, and even more preferably $\geq 110$, relative to that of R404A.

Moreover, the present composition has a GWP of $\leq 1500$, and thus can notably reduce a burden on the environment from a global warming perspective compared with other general-purpose refrigerants.

R404A is a refrigerant currently widely used for freezing and refrigerated storage, and the present composition can be an alternative refrigerant for R404A.

In the present composition, the mixture described above may consist of three basic components, i.e., difluoromethane (R32), pentafluoroethane (R125), and 1,1,1,2-tetrafluoroethane (R134a), or may comprise one or more components that are different from the three basic components (referred to as "other components") in addition to the three basic components. Hereinafter, difluoromethane (R32), pentafluoroethane (R125), and 1,1,1,2-tetrafluoroethane (R134a) are referred to as "three basic components" and one or more components that are different from the three basic components are referred to as "other components." Other components are described in detail later. The present composition may consist of the mixture, or may comprise any additives described later, such as a refrigerant oil, in addition to the mixture.

When the mixture contains other components, the mixture contains other components in amounts such that the functions of the three basic components are not impaired. From this viewpoint, the content of other components in the mixture is $\leq 0.5$ wt.-%, preferably $\leq 0.3$ wt.-%, and more preferably $\leq 0.1$ wt.-%.

Mixture containing fluorinated hydrocarbons

The present composition comprises a mixture containing fluorinated hydrocarbons, the composition ratio of the fluorinated hydrocarbons contained in the mixture falling within a triangle having the following three points as vertices in a ternary composition diagram (Fig. 1) in which the sum of the concentrations of difluoromethane (R32), pentafluoroethane (R125), and 1,1,1,2-tetrafluoroethane (R134a) is 100 wt.-%:

point A (R32/R125/R134a = 37.3/17.0/45.7 wt.-%),
point F (R32/R125/R134a = 30.7/10.9/58.4 wt.-%), and
point G (R32/R125/R134a = 29.4/14.1/56.5 wt.-%),

wherein the mixture comprises R32, R125, and R134a in amounts such that the sum of the concentrations thereof is $\geq 99.5$ wt.-%.

As is described in detail below, in Fig. 1, a straight line passing through two points, i.e., point A and point F, shows an ASHRAE non-flammable border line; a straight line passing through two points, i.e., point A and point G, shows a line indicating a composition ratio at which the GWP is 1500; and a straight line passing through two points, i.e., point F and point G, shows a line indicating a composition ratio at which the refrigerating capacity is 94% relative to that of R404A.

In view of improving the refrigerating capacity, a preferred embodiment is, for example, the following Embodiment 2 or Embodiment 3, in which the range of the triangle is smaller than the range of the triangle of Embodiment 1.

In Embodiment 2, the composition ratio of the fluorinated hydrocarbons contained in the mixture falls within a triangle having the following three points as vertices in a ternary composition diagram (Fig. 1) in which the sum of the concentrations of R32, R125, and R134a is 100 wt.-%:

point A (R32/R125/R134a = 37.3/17.0/45.7 wt%),
point D (R32/R125/R134a = 31.4/11.5/57.1 wt.-%), and
point E (R32/R125/R134a = 30.2/14.4/55.4 wt.-%).

In Embodiment 2, a straight line passing through two points, i.e., point D and point E, shows a line indicating a composition ratio in which the refrigerating capacity is 95% relative to that of R404A.

In Embodiment 3, the composition ratio of the fluorinated hydrocarbons contained in the mixture falls within a triangle having the following three points as vertices in a ternary composition diagram (Fig. 1) in which the sum of the concentrations of R32, R125, and R134a is 100 wt.-%: point A (R32/R125/R134a = 37.3/17.0/45.7 wt.-%), point B (R32/R125/R134a = 34.0/13.9/52.1 wt.-%), and point C (R32/R125/R134a = 33.3/15.5/51.2 wt.-%).

In Embodiment 3, a straight line passing through two points, i.e., point B and point C, shows a line indicating a composition ratio at which the refrigerating capacity is 100% relative to that of R404A.

The technical meaning of each point in Fig. 1 is described in detail below.

In Fig. 1, when the wt.-% of R32 = x, the wt.-% of R125 = y, and the wt.-% of R134a = z, a line segment indicating an ASHRAE non-flammable border line is approximated by a line segment represented by the following equations.

ASHRAE non-flammable border line: a straight line passing through two points, i.e., point A and point F (line segment P of Fig. 1)

$$y = 0.9286x - 17.643$$

$$z = 100 - x - y$$

$$19 \le x \le 61$$

The ASHRAE flammability classification of refrigerants is now described.

The ASHRAE flammability classification of refrigerants is performed based on ANSI/ASHRAE Standard 34-2013. Refrigerants classified as Class 1 are non-flammable refrigerants. That is, the present composition being non-flammable according to ASHRAE means that the mixture containing fluorinated hydrocarbons used in the present invention (in particular, the three basic components) is classified as Class 1 in flammability classification.

More specifically, a leak test during storage, transportation, and use is performed based on ANSI/ASHRAE 34-2013 to specify the worst case of fractionation for flammability (WCFF). When the WCFF composition can be identified as being non-flammable in a test based on ASTM E681-09 (a standard test method for concentration limits of flammability of chemicals (vapors and gases)), it is classified as Class 1.

In Fig. 1, the R125 side from the line segment AF is classified as a mixed refrigerant that is non-flammable according to ASHRAE, whereas the R32 side from the line segment AF is classified as a mixed refrigerant that is flammable according to ASHRAE (Class 2: slightly flammable mixed refrigerants, Class 3: flammable mixed refrigerants).

However, in the production of a mixed refrigerant, an allowable range (including an allowable error) is set for each refrigerant. Thus, even if the center composition of the mixed refrigerant is on the R125 side from the line segment AF of Fig. 1, when the allowable ranges are not all on the R125 side from the line segment AF, the mixed refrigerant is not defined as a mixed refrigerant that is non-flammable according to ASHRAE.

For example, in the case where R32 = (32.5 ± 1) wt.-%, R125 = (15.0 ± 1) wt.-% and R134a = (52.5 ± 2) wt.-%, all of the allowable ranges are on the R125 side from the line segment AF as shown in Fig. 2, and thus, the case is classified as a mixed refrigerant that is non-flammable according to ASHRAE. On the other hand, in the case where R32 = (32.0 ± 1) wt.-%, R125 = (15.0 ± 1) wt.-% and R134a = (55.0 ± 2) wt.-%, the allowable ranges are partially on the R32 side from the line segment AF, and thus, a mixed refrigerant in which these allowable ranges are set is classified as a mixed refrigerant that is flammable according to ASHRAE.

In Fig. 1, when the wt.-% of R32 = x, the wt.-% of R125 = y, and the wt.-% of R134a = z, a line segment indicating a composition ratio at which GWP = 1500 is approximated by a line segment represented by the following equations.

Line segment indicating a composition ratio at which GWP = 1500: a straight line passing through two points, i.e., point A and point G (line segment L of Fig. 1)

$$y = 0.3644x + 3.400$$

$$z = 100 - x - y$$

$$0 \le x \le 70.8$$

In addition, line segments indicating composition ratios at which the refrigerating capacity is 94%, 95%, and 100% relative to that of R404A are approximated by line segments represented by the following equations.

Line segment indicating a composition ratio at which the refrigerating capacity is 94% relative to that of R404A: a straight line passing through two points, i.e., points F and G (line segment Z of Fig. 1)

$$y = -2.35x + 83.25$$

$$25 \leq x \leq 35$$

Line segment indicating a composition ratio at which the refrigerating capacity is 95% relative to that of R404A: a straight line passing through two points, i.e., points D and E (line segment Y of Fig. 1)

$$y = -2.35x + 85.25$$

$$25 \leq x \leq 35$$

Line segment indicating a composition ratio at which the refrigerating capacity is 100% relative to that of R404A: a straight line passing through two points, i.e., points B and C (line segment X of Fig. 1)

$$y = -2.26x + 90.8$$

$$30 \leq x \leq 35$$

Components other than the three basic components

The mixture contained in the present composition may further contain a tiny amount of water in addition to the three basic components (R32, R125, and R134a). The amount of water is preferably $\leq 0.1$ parts by weight (pbw), per 100 pbw of the mixture. When the mixture contains a tiny amount of water, the double bonds in the molecules of unsaturated fluorinated hydrocarbons that may be contained in the composition can be stably present, and oxidation of unsaturated fluorinated hydrocarbons is less likely to occur, resulting in improved stability of the composition.

The mixture contained in the present composition may contain other component(s) (fluorinated hydrocarbon(s) that are different from the three basic components) in addition to the three basic components (R32, R125, and R134a). The fluorinated hydrocarbon(s) as other component(s) are not particularly limited, and, are, for example, at least one fluorinated hydrocarbon selected from HCFC-1122, HCFC-124, CFC-1113, and 3,3,3-trifluoropropyne.

The mixture contained in the present composition may contain, in addition to the three basic components (R32, R125, and R134a), at least one halogenated organic compound of the formula ($C_mH_nX_p$ (1), wherein X each independently is F, Cl or Br, m is 1 or 2, $(2m+2) \geq (n+p)$, and $p \geq 1$, as other component(s). The at least one halogenated organic compound as other component(s) is not particularly limited. Preferable examples include difluorochloromethane, chloromethane, 2-chloro-1,1,1,2,2-pentafluoroethane, 2-chloro-1,1,1,2-tetrafluoroethane, 2-chloro-1,1-difluoroethylene and trifluoroethylene.

The mixture contained in the present composition may contain, in addition to the three basic components (R32, R125, and R134a), at least one organic compound of the formula $C_mH_nX_p$ (2), wherein X each independently is an atom that is not a halogen atom, m is 1 or 2, $(2m+2) \geq (n+p)$, and $p \geq 1$, as other component(s). The at least one organic compound as other component(s) is not particularly limited. Preferable examples include propane and isobutane.

As described above, when the mixture contains other components, the content of other components in the mixture, whether other components are used singly or in a combination of two or more, is $\leq 0.5$ wt.-%, preferably $\leq 0.3$ wt.-%, and more preferably $\leq 0.1$ wt.-%, as the total content amount.

Optional additives

The present composition may appropriately contain various additives in addition to the mixture.

The present composition may further contain a refrigerant oil. The refrigerant oil is not particularly limited and can be suitably selected from commonly used refrigerant oils. In this case, a refrigerant oil that is more excellent in terms of, for example, the effect of improving miscibility with the mixture and stability of the mixture, may be appropriately selected, if necessary.

Although there is no particular limitation, the stability of the mixture can be evaluated by a commonly used method. Examples of such methods include an evaluation method using the amount of free fluorine ions as an index according to ASHRAE Standard 97-2007. There is, for example, another evaluation method using the total acid number as an index. This method can be performed, for example, according to ASTM D 974-06.

Preferred as the type of the refrigerant oil is, specifically, for example, at least one of polyalkylene glycol (PAG), polyol ester (POE), and polyvinyl ether (PVE).

The refrigerant oil to be used may have, for example, a kinematic viscosity at 40°C of 5-400 cSt. When the refrigerant oil has a kinematic viscosity within this range, it is preferable in terms of lubricity.

The concentration of the refrigerant oil is not particularly limited, and may be generally 10-50 wt.-%, relative to the entire composition.

The present composition may further contain one or more tracers. The one or more tracers are added to the present composition at a detectable concentration so that, when the present composition is diluted, contaminated, or undergoes any other change, the change can be traced. There is no limitation on the tracers. Preferable examples include hydrofluorocarbons, deuterated hydrocarbons, deuterated hydrofluorocarbons, perfluorocarbons, fluoroethers, brominated compounds, iodinated compounds, alcohols, aldehydes, ketones and nitrous oxide ($N_2O$). Particularly preferred are hydrofluorocarbons or fluoroethers.

The present composition may further contain a compatibilizer. The type of compatibilizer is not particularly limited. Preferable examples include polyoxyalkylene glycol ethers, amides, nitriles, ketones, chlorocarbons, esters, lactones, aryl ethers, fluoroethers and 1,1,1-trifluoroalkans. Particularly preferred are polyoxyalkylene glycol ethers.

The present composition may further contain one or more ultraviolet fluorescent dyes. There is no limitation on the ultraviolet fluorescent dyes. Preferable examples include naphthalimide, coumarin, anthracene, phenanthrene, xanthene, thioxanthene, naphthoxanthene, and fluorescein, and derivatives thereof. Either naphthalimide or coumarin, or both are particularly preferable.

The present composition may further contain, for example, a stabilizer and/or a polymerization inhibitor, if necessary.

Examples of stabilizers include, but are not particularly limited to, (i) aliphatic nitro compounds, such as nitromethane and nitroethane; and aromatic nitro compounds, such as nitrobenzene and nitrostyrene; (ii) ethers, such as 1,4-dioxane; amines, such as 2,2,3,3,3-pentafluoropropylamine and diphenylamine; butylhydroxyxylene and benzotriazole. The stabilizers can be used singly or in a combination of two or more.

The concentration of the stabilizer varies depending on the type of stabilizer, but can be determined within a range in which the properties of the composition are not impaired. The concentration of the stabilizer is generally preferably 0.01-5 pbw, and more preferably 0.05-2 pbw, per 100 pbw of the mixture.

Examples of polymerization inhibitors include, but are not particularly limited to, 4-methoxy-1-naphthol, hydroquinone, hydroquinonemethyl ether, dimethyl-t-butylphenol, 2,6-di-tert-butyl-p-cresol and benzotriazole.

The concentration of the polymerization inhibitor is generally preferably 0.01-5 pbw, and more preferably 0.05-2 pbw, per 100 pbw of the mixture.

In an example of an embodiment of the present invention, an object can be refrigerated by a method comprising the step of operating a refrigeration cycle using the present composition. For example, the present composition can be circulated via a compressor to form the refrigeration cycle.

It is also possible to produce an apparatus for forming a refrigeration cycle in which the present composition is circulated via a compressor.

Examples of refrigerating devices that can use the present composition include, but are not limited to, refrigerators, freezers, water coolers, ice machines, refrigerating showcases, freezing showcases, freezing and refrigerating units, refrigerating devices used, for example, for freezing and refrigerating warehouses, chillers (chilling units), turbo refrigerators and screw refrigerators.

Method for producing composition

The method for producing the present composition comprises mixing R32, R125, and R134a such that the composition ratio thereof is adjusted to fall within a triangle having the following three points as vertices in a ternary composition diagram (Fig. 1) in which the sum of the concentrations of R32, R125, and R134a is 100 wt.-%:

point A (R32/R125/R134a = 37.3/17.0/45.7 wt.-%),
point F (R32/R125/R134a = 30.7/10.9/58.4 wt.-%), and
point G (R32/R125/R134a = 29.4/14.1/56.5 wt%), wherein the mixture comprises R32, R125, and R134a in amounts such that the sum of the concentrations thereof is ≥ 99.5 wt.-%.

For producing the composition of the present Embodiments 2 and 3 comprises mixing R32, R125, and R134a such that the composition ratio thereof is adjusted to fall within a triangle having the following three points as vertices in a ternary composition diagram (Fig. 1) in which the sum of the concentrations of R32, R125, and R134a is 100 wt.-%:

point A (R32/R125/R134a = 37.3/17.0/45.7 wt.-%),
point D (R32/R125/R134a = 31.4/11.5/57.1 wt.-%), and
point E (R32/R125/R134a = 30.2/14.4/55.4 wt.-%) for Embodiment 2, and

point A (R32/R125/R134a = 37.3/17.0/45.7 wt.-%),
point B (R32/R125/R134a = 34.0/13.9/52.1 wt.-%), and
point C (R32/R125/R134a = 33.3/15.5/51.2 wt.-%) for Embodiment 3. Examples

The present invention is described in detail below with reference to Examples.

Examples 1-13 and Comparative Examples 1-12

The GWP of each of R404A and mixed refrigerants of R32, R125, and R134a was evaluated based on the values described in the Intergovernmental Panel on Climate Change (IPCC) fourth report.

The COP and refrigerating capacity of each of R404A and the mixed refrigerants of R32, R125, and R134a were determined by performing refrigeration cycle theoretical calculations for the refrigerant and mixed refrigerants using the National Institute of Science and Technology (NIST) and Reference Fluid Thermodynamic and Transport Properties Database (Refprop 9.0) under the following conditions.
Evaporation temperature -40°C
Condensation temperature 40°C
Superheating temperature 20K
Supercooling temperature 0K
Compressor efficiency 70%

In Fig. 1, the proportions of the components of the compositions of the Examples are indicated by solid triangles (▲).

Tables 1 and 2 show the GWP, COP, and refrigerating capacity calculated based on these results. Regarding the COP and refrigerating capacity, the percentages relative to those of R404A are shown.

The coefficient of performance (COP) was calculated according to the following equation.

$$COP = (refrigerating\ capacity\ or\ heating\ capacity)\ /\ amount\ of$$
$$electrical\ power\ consumed$$

The flammability of the mixture of the three basic components used in the composition was evaluated according to U.S. ASHRAE Standard 34-2013. The flammability test was conducted in accordance with ASTM E681-09. Fig. 2 shows a non-flammable border line (P), a flammable region (Q), and a non-flammable region (R).

A 12-L spherical glass flask was used so that the combustion state could be visually observed and photographically recorded. When excessive pressure was generated by combustion, gas was allowed to escape from the upper lid. Ignition was achieved by electric discharge from electrodes disposed at one-third the distance from the bottom.

Test conditions

Test vessel: 280 mm φ spherical (internal volume: 12 liters)
Test temperature: $(60 \pm 3)$°C
Pressure: 101.3 kPa $\pm$0.7 kPa
Water: $(0.0088 \pm 0.0005)$ g/g of dry air
Mixing ratio of composition/air: 1 vol.-% increments $\pm$0.2 vol.-%
Composition mixture: $\pm$0.1 wt.-%
Ignition method: AC discharge, voltage: 15 kV, electric current: 30 mA, neon transformer
Electrode spacing: 6.4 mm (1/4 inch)
Spark: $(0.4 \pm 0.05)$ seconds
Evaluation criteria: When the flame propagation extends at an angle of > 90° from the ignition point, it was evaluated as flammable.

The composition ratio of R32, R125, and R134a (x/y/z wt.-%) in the non-flammability limit almost satisfied the relationship represented by the following equations (1)(3).

$$19 \le x \le 61 \quad (1)$$

$$y = 0.9286x - 17.643 \quad (2)$$

$$z = 100 - x - y \quad (3)$$

The results revealed that the composition of the present invention is non-flammable, and causes no combustion, even when mixed with air at any ratio.

Table 1

| Item | | Unit | R404A | 1 | 2 | 3 | 4 | 5 | 6 | 7 | 8 | 9 | 10 | 11 | 12 | 13 |
|---|---|---|---|---|---|---|---|---|---|---|---|---|---|---|---|---|
| | | | | Point A | Within △ABC | Point B | Point C | Within △ADE | Within △ADE | Within △ADE | Within △ADE | Within △ADE | Point D | Point E | Point F | Point G |
| Composition | R32 | mass % | 0 | 37.3 | 34.0 | 34.0 | 33.3 | 32.5 | 32.5 | 33.0 | 33.0 | 32.0 | 31.4 | 30.2 | 30.7 | 29.4 |
| | R125 | mass % | 44.0 | 17.0 | 15.0 | 13.9 | 15.5 | 14.5 | 15.0 | 14.5 | 15.0 | 13.0 | 11.5 | 14.4 | 10.9 | 14.1 |
| | R134a | mass % | 4.0 | 45.7 | 51.0 | 52.1 | 51.2 | 53.0 | 52.5 | 52.5 | 52.0 | 55.0 | 57.1 | 55.4 | 58.4 | 56.5 |
| | R143a | mass % | 52.0 | 0 | 0 | 0 | 0 | 0 | 0 | 0 | 0 | 0 | 0 | 0 | 0 | 0 |
| GWP | | year | 3922 | 1500 | 1484 | 1461 | 1500 | 1485 | 1495 | 1481 | 1491 | 1458 | 1431 | 1500 | 1424 | 1500 |
| Performance | Coefficient of performance | % (relative to that of R404A) | 100 | 111 | 112 | 112 | 112 | 112 | 112 | 112 | 112 | 112 | 112 | 112 | 112 | 112 |
| | Refrigerating capacity | % (relative to that of R404A) | 100 | 106 | 101 | 100 | 100 | 98 | 99 | 99 | 99 | 97 | 95 | 95 | 94 | 94 |
| flammable/nonflammble | | - | nonflammable | nonflammable | nonflammable | nonflammable | nonflammable | nonflammable | nonflammable | nonflammable | nonflammable | nonflammable | nonflammable | nonflammable | nonflammable | nonflammable |

Table 2

| Item | | Unit | R404A | Comparative Example | | | | | | | | | | | |
|---|---|---|---|---|---|---|---|---|---|---|---|---|---|---|---|
| | | | | 1 | 2 | 3 | 4 | 5 | 6 | 7 | 8 | 9 | 10 | 11 | 12 |
| Composition | R32 | mass % | 0 | 20.0 | 25.0 | 30.0 | 35.0 | 40.0 | 20.0 | 25.0 | 30.0 | 35.0 | 20.0 | 25.0 | 35.0 |
| | R125 | mass % | 44.0 | 47.0 | 35.0 | 23.0 | 11.7 | 1.0 | 38.5 | 26.5 | 14.5 | 3.0 | 37.0 | 24.5 | 1.0 |
| | R134a | mass % | 4.0 | 33.0 | 40.0 | 47.0 | 53.3 | 59.0 | 41.5 | 48.5 | 55.5 | 62.0 | 43.0 | 50.5 | 64.0 |
| | R143a | mass % | 52.0 | 0 | 0 | 0 | 0 | 0 | 0 | 0 | 0 | 0 | 0 | 0 | 0 |
| GWP | | year | 3922 | 2252 | 1966 | 1680 | 1408 | 1149 | 2076 | 1790 | 1504 | 1228 | 2045 | 1748 | 1186 |
| performance | Coefficient of performance | % (relative to that of R404A) | 100 | 107 | 109 | 111 | 112 | 113 | 109 | 110 | 112 | 113 | 109 | 111 | 113 |
| | Refrigerating capacity | % (relative to that of R404A) | 100 | 100 | 100 | 100 | 100 | 100 | 95 | 95 | 95 | 95 | 94 | 94 | 94 |
| Flammable/nonflammable | | - | nonflammable | nonflammable | nonflammable | nonflammable | flammable | flammable | nonflammable | nonflammable | nonflammable | flammable | nonflammable | nonflammable | flammable |

In Comparative Examples 1-5, compositions having composition ratios at which the refrigerating capacity was 100% relative to that of R404A were obtained. The compositions of Comparative Examples 1-3 had a GWP of > 1500, and the compositions of Comparative Examples 4 and 5 were flammable.

In Comparative Examples 6-9, compositions having composition ratios at which the refrigerating capacity was 95% relative to that of R404A were obtained. The compositions of Comparative Examples 6-8 had a GWP of > 1500, and the composition of Comparative Example 9 was flammable.

In Comparative Examples 10-12, compositions having composition ratios at which the refrigerating capacity was 94% relative to that of R404A were obtained. The compositions of Comparative Examples 10 and 11 had a GWP of > 1500, and the composition of Comparative Example 12 was flammable.

Description of Reference Numerals

A: Composition ratio of Example 1
B: Composition ratio of Example 3
C: Composition ratio of Example 4
D: Composition ratio of Example 10
E: Composition ratio of Example 11
F: Composition ratio of Example 12
G: Composition ratio of Example 13
L: Approximation line segment of line segment indicating GWP = 1500
X: Approximation line segment of line segment indicating a composition ratio at which the refrigerating capacity is 100% (relative to that of R404A)
Y: Approximation line segment of line segment indicating a composition ratio at which the refrigerating capacity is 95% (relative to that of R404A)
Z: Approximation line segment of line segment indicating a composition ratio at which the refrigerating capacity is 94% (relative to that of R404A)
P: ASHRAE non-flammable border line
Q: ASHRAE flammable region
R: ASHRAE non-flammable region
1: Ignition source
2: Sample inlet
3: Springs
4: 12-liter glass flask
5: Electrodes
6: Stirrer
7: Insulated chamber

**Claims**

1. A composition comprising a mixture containing difluoromethane (R32), pentafluoroethane (R125), and 1,1,1,2-tetrafluoroethane (R134a), wherein in a ternary composition diagram in which the sum of the concentrations (in wt.-%) of R32, R125 and R134a is 100 wt.-% the composition ratio of the R32, R125 and R134a contained in the mixture falls within a triangle having the points A, F and G as vertices:

    point A (R32/R125/R134a = 37.3/17.0/45.7),
    point F (R32/R125/R134a = 30.7/10.9/58.4), and
    point G (R32/R125/R134a = 29.4/14.1/56.5);

    preferably the points A, D and E:

    point A (R32/R125/R134a = 37.3/17.0/45.7),
    point D (R32/R125/R134a = 31.4/11.5/57.1), and
    point E (R32/R125/R134a = 30.2/14.4/55.4);

    and more preferably the points A, B and C:

point A (R32/R125/R134a = 37.3/17.0/45.7),
point B (R32/R125/R134a = 34.0/13.9/52.1), and
point C (R32/R125/R134a = 33.3/15.5/51.2);

wherein the mixture comprises R32, R125, and R134a in amounts such that the sum of the concentrations thereof is $\geq$ 99.5 wt.-%.

2. The composition of claim 1, wherein the mixture further comprises at least one of HCFC-1122, HCFC-124, CFC-1113, and 3,3,3-trifluoropropyne.

3. The composition of claim 1 or 2, wherein the mixture further comprises at least one compound of the formula $C_m H_n X_p$ (1), wherein X each independently is F, Cl or Br, m is 1 or 2, $(2m+2) \geq (n+p)$ and $p \geq 1$.

4. The composition of any of claims 1-3, wherein the mixture further comprises water.

5. The composition of any of claims 1-4, wherein the mixture consists of R32, R125, and R134a.

6. The composition of any of claims 1-5, wherein the mixture has a GWP of $\leq$ 1500, and the refrigerating capacity of the mixture is $\geq$ 94% relative to the refrigerating capacity of R404A.

7. The composition of any of claims 1-6, wherein the mixture is an alternative refrigerant for R404A (R125/R134a/R143a = 44/4/52 wt.-%) that is a mixed refrigerant.

8. The composition of any of claims 1-7, comprising a refrigerant oil.

9. The composition of claim 8, wherein the refrigerant oil comprises at least one polymer selected from polyalkylene glycol (PAG), polyol ester (POE), and polyvinyl ether (PVE).

10. The composition of any of claims 1-9, comprising at least one substance selected from tracers, compatibilizers, ultraviolet fluorescent dyes, stabilizers, and polymerization inhibitors.

11. The composition of any of claims 1-10, which is used for at least one of refrigerators, freezers, water coolers, ice machines, refrigerating showcases, freezing showcases, freezing and refrigerating units, refrigerating devices for freezing and refrigerating warehouses, chillers (chilling units), turbo refrigerators, and screw refrigerators.

12. A method for producing the composition of any of claims 1-11, comprising mixing R32, R125 and R134a such that the composition ratio thereof is adjusted to fall within the ranges defined in claim 1.

13. A method for operating a refrigerating device, comprising operating a refrigeration cycle using the composition of any of claims 1-11.

14. A refrigerating device comprising the composition of any of claims 1-11.

**Patentansprüche**

1. Zusammensetzung, umfassend eine Mischung, die Difluormethan (R32), Pentafluorethan (R125) und 1,1,1,2-Tetrafluorethan (R134a) enthält, wobei in einem ternären Zusammensetzungsdiagramm, in dem die Summe der Konzentrationen (in Gew.%) von R32, R125 und R134a 100 Gew.% beträgt, das Zusammensetzungsverhältniss von R32, R125 und R134a, die in der Mischung enthalten sind, in ein Dreieck fällt, das die Punkte A, F und G:

Punkt A (R32/R125/R134a = 37,3/17,0/45,7),
Punkt F (R32/R125/R134a = 30,7/10,9/58,4) und
Punkt G (R32/R125/R134a = 29,4/14,1/56,5);

vorzugsweise die Punkte A, D und E:

Punkt A (R32/R125/R134a = 37,3/17,0/45,7),

Punkt D (R32/R125/R134a = 31,4/11,5/57,1) und
Punkt E (R32/R125/R134a = 30,2/14,4/55,4);

und starker bevorzugt die Punkte A, B und C:

Punkt A (R32/R125/R134a = 37,3/17,0/45,7),
Punkt B (R32/R125/R134a = 34,0/13,9/52,1) und
Punkt C (R32/R125/R134a = 33,3/15,5/51,2);

als Eckpunkte aufweist,
wobei die Mischung R32, R125 und R134a in solchen Mengen umfasst, dass die Summe ihrer Konzentrationen $\geq$ 99,5 Gew.% beträgt.

2. Zusammensetzung gemäss Anspruch 1, wobei die Mischung ferner zumindest eines von HCFC-1122, HCFC-124, CFC-1113 und 3,3,3-Trifluorpropyn umfasst.

3. Zusammensetzung gemäss Anspruch 1 oder 2, wobei die Mischung ferner zumindest eine Verbindung der Formel $C_mH_nX_p$ (1) umfasst, wobei X jeweils unabhängig F, Cl oder Br ist, m 1 oder 2 ist, $(2m+2) \geq (n+p)$ ist und $p \geq 1$ ist.

4. Zusammensetzung gemäss einem der Ansprüche 1 bis 3, wobei die Mischung ferner Wasser umfasst.

5. Zusammensetzung gemäss einem der Ansprüche 1 bis 4, wobei die Mischung aus R32, R125 und R134a besteht.

6. Zusammensetzung gemäss einem der Ansprüche 1 bis 5, wobei die Mischung ein GWP von $\leq 1.500$ aufweist und die Kälteleistung der Mischung $\geq 94$ %, bezogen auf die Kälteleistung von R404A, beträgt.

7. Zusammensetzung gemäss einem der Ansprüche 1 bis 6, wobei die Mischung ein alternatives Kältemittel für R404A (R125/R134a/R143a = 44/4/52 Gew.) ist, das ein Kältemittelgemisch ist.

8. Zusammensetzung gemäss einem der Ansprüche 1 bis 7, die ein Kältemittelöl umfasst.

9. Zusammensetzung gemäss Anspruch 8, wobei das Kältemittelöl zumindest ein Polymer, ausgewählt aus Polyalkylenglykol (PAG), Polyolester (POE) und Polyvinylether (PVE), umfasst.

10. Zusammensetzung gemäss einem der Ansprüche 1 bis 9, die zumindest eine Substanz, ausgewählt aus Tracern, Kompatibilisatoren, Ultraviolettfluoreszenzfarbstoffen, Stabilisatoren und Polymerisationsinhibitoren, umfasst.

11. Zusammensetzung gemäss einem der Ansprüche 1 bis 10, die für zumindest eines von Kühlschränken, Gefrierschränken, Wasserkühlern, Eismaschinen, Kühlvitrinen, Gefriervitrinen, Gefrier- und Kühleinheiten, Kühlvorrichtungen für Gefrier- und Kühlhäuser, Kältemaschinen (Kälteaggregaten), Turbokühlern und Schraubenkühlern verwendet wird.

12. Verfahren zur Herstellung der Zusammensetzung gemäss einem der Ansprüche 1 bis 11, umfassend das Mischen von R32, R125 und R134a, so dass das Zusammensetzungsverhältnis hiervon so eingestellt ist, dass es innerhalb der in Anspruch 1 definierten Bereiche fällt.

13. Verfahren zum Betrieb einer Kühlvorrichtung, umfassend den Betrieb eines Kühlkreislaufs unter Verwendung der Zusammensetzung gemäss einem der Ansprüche 1 bis 11.

14. Kühlvorrichtung, umfassend die Zusammensetzung gemäss einem der Ansprüche 1 bis 11.

**Revendications**

1. Composition comprenant un mélange contenant du difluorométhane (R32), du pentafluoroéthane (R125), et du 1,1,1,2-tétrafluoroéthane (R134a), dans laquelle dans un diagramme de composition ternaire dans lequel la somme des concentrations (en % en poids) de R32, R125 et R134a est de 100% en poids le rapport de composition des R32, R125 et R134a contenus dans le mélange s'inscrit au sein d'un triangle ayant les points A, F et G en tant que sommets :

point A (R32/R125/R134a = 37,3/17,0/45,7),
point F (R32/R125/R134a = 30,7/10,9/58,4), et
point G (R32/R125/R134a = 29,4/14,1/56,5) ;

de préférence les points A, D et E :

point A (R32/R125/R134a = 37,3/17,0/45,7),
point D (R32/R125/R134a = 31,4/11,5/57,1), et
point E (R32/R125/R134a = 30,2/14,4/55,4) ;

et plus préférablement les points A, B et C :

point A (R32/R125/R134a = 37,3/17,0/45,7),
point B (R32/R125/R134a = 34,0/13,9/52,1), et
point C (R32/R125/R134a = 33,3/15,5/51,2) ;

dans laquelle le mélange comprend R32, R125 et R134a dans des quantités de sorte que la somme des concentrations de ceux-ci est $\geq$ 99,5 % en poids.

2. Composition selon la revendication 1, dans laquelle le mélange comprend en outre au moins un parmi HCFC-1122, HCFC-124, CFC-1113 et la 3,3,3-trifluoropropyne.

3. Composition selon la revendication 1 ou 2, dans laquelle le mélange comprend en outre au moins un composé répondant à la formule $C_mH_nX_p$ (1), dans laquelle chaque X est indépendamment F, Cl ou Br, m vaut 1 ou 2, $(2m + 2) \geq (n + p)$ et p $\geq$ 1.

4. Composition selon l'une quelconque des revendications 1 à 3, dans laquelle le mélange comprend en outre de l'eau.

5. Composition selon l'une quelconque des revendications 1 à 4, dans laquelle le mélange est constitué par R32, R125 et R134a.

6. Composition selon l'une quelconque des revendications 1 à 5, dans laquelle le mélange a un PRG $\leq$ 1 500, et la capacité de réfrigération du mélange est $\geq$ 94 % par rapport à la capacité de réfrigération de R404A.

7. Composition selon l'une quelconque des revendications 1 à 6, dans laquelle le mélange est un réfrigérant alternatif pour R404A (R125/R134a/R143a = 44/4/52 % en poids) qui est un réfrigérant mixte.

8. Composition selon l'une quelconque des revendications 1 à 7, comprenant une huile réfrigérante.

9. Composition selon la revendication 8, dans laquelle l'huile réfrigérante comprend au moins un polymère sélectionné à partir du polyalkylène glycol (PAG), de l'ester de polyol (POE) et de l'éther polyvinylique (PVE).

10. Composition selon l'une quelconque des revendications 1 à 9, comprenant au moins une substance sélectionnée à partir des traceurs, des agents de compatibilité, des colorants fluorescents ultraviolets, des stabilisateurs et des inhibiteurs de polymérisation.

11. Composition selon l'une quelconque des revendications 1 à 10, qui est utilisée pour au moins l'un parmi des réfrigérateurs, des congélateurs, des rafraîchisseurs d'eau, des machines à glace, des armoires vitrées réfrigérées, des armoires vitrées de congélation, des unités de congélation et de réfrigération, des dispositifs de réfrigération pour congeler et réfrigérer des entrepôts, des refroidisseurs (unités de refroidissement), des turbo-réfrigérateurs et des réfrigérateurs à vis.

12. Procédé pour produire la composition selon l'une quelconque des revendications 1 à 11, comprenant le mélange de R32, R125 et R134a de sorte que le rapport de composition de ceux-ci est ajusté pour s'inscrire au sein des plages définies dans la revendication 1.

13. Procédé pour faire fonctionner un dispositif de réfrigération, comprenant la commande d'un cycle de réfrigération à l'aide de la composition selon l'une quelconque des revendications 1 à 11.

14. Dispositif de réfrigération comprenant la composition selon l'une quelconque des revendications 1 à 11.

Fig. 1

Fig. 2

Fig. 3

**EP 3 141 587 B1**

## REFERENCES CITED IN THE DESCRIPTION

**Patent documents cited in the description**

- JP 2869038 B
- US 8168077 B
- EP 0811670 A